# EUROPEAN PATENT APPLICATION

(11) **EP 2 578 835 A1**
(43) Date of publication of application: **10.04.2013**
(21) Application number: 11789875.9
(22) Date of filing: 01.06.2011
(51) Int. Cl.: F01N 3/20, F01N 3/08, F01N 3/24, F01N 3/36

(54) **INTERNAL COMBUSTION ENGINE WITH DENITRIFICATION UNIT, AND OCEAN VESSEL PROVIDED WITH SAME**

(30) Priority: 02.06.2010 JP 2010127136
(71) Applicant: Mitsubishi Heavy Industries, Ltd., Tokyo 108-8215 (JP)
(72) Inventor: SHIRAISHI, Keiichi, Tokyo 108-8215 (JP)
(74) Representative: HOFFMANN EITLE
(86) International application number: PCT/JP2011/062635
(87) International publication number: WO 2011/152473

(57) **Abstract**

In an internal combustion engine (1) provided with a blower (3) that blows air; a combustion chamber (4) that generates a driving force by combusting the air blown by the blower (3) and fuel and that also exhausts exhaust gas; a supercharger (2) that is driven by the exhaust gas exhausted from the combustion chamber (4); a denitrification device (10) having a catalyst that performs reduction of nitrogen oxides in the exhaust gas exhausted from the supercharger (2); and a burner unit (8) that is provided between the combustion chamber (4) and the supercharger (2) and from which fuel is sprayed into the exhaust gas to be guided to the supercharger (2) to cause combustion, the air blown by the blower (3) is led out from the combustion chamber (4) as combustion air before starting up the internal combustion engine (1).

## Description

### {Technical Field}

The present invention relates to an internal combustion engine with a denitrification unit and to a ship provided with the same.

### {Background Art}

With an increasing interest in environmental protection in recent years, there is a need for reducing nitrogen oxides (hereinafter, referred to as "NOx") contained in exhaust gas exhausted from ships. In order to achieve NOx reduction, there is a generally known method in which exhaust gas exhausted from, for example, an internal combustion engine employed as a main engine installed in a ship is passed through a denitrification catalyst (for example, see Patent Literatures 1 and 2).

The reduction reaction of NOx employing a denitrification catalyst is preferably performed at a temperature higher than 300 °C to 320 °C. Accordingly, a method is employed in which the temperature of the exhaust gas to be introduced into the denitrification catalyst is increased by disposing the denitrification catalyst on the downstream side of a supercharger provided in the internal combustion engine and also by disposing a burner that combusts fuel between the supercharger and the denitrification catalyst or between the internal combustion engine and the supercharger.

### {Citation List}

### {Patent Literature}

{PTL 1} Japanese Examined Patent Application, Publication No. Hei 07-006380
{PTL 2} Japanese Unexamined Patent Application, Publication No. Hei 05-288040

### {Summary of Invention}

### {Technical Problem}

However, when exhaust gas whose temperature is increased by using the burner immediately after the internal combustion engine is started up is introduced into the denitrification catalyst, there is a problem in that a sufficient denitrifying effect cannot be obtained because the denitrification catalyst is in a low-temperature state.

The present invention has been conceived in light of the above-described circumstances, and an object thereof is to provide an internal combustion engine that is capable of reducing nitrogen oxides in exhaust gas from start-up time of the internal combustion engine, as well as a ship provided with the same.

### {Solution to Problem}

In order to solve the above-described problems, an internal combustion engine according to the present invention and a ship provided with the same employ the following solutions.
Specifically, with the internal combustion engine according to the present invention, in an internal combustion engine including a blower that blows air; a combustion chamber that generates a driving force by combusting the air blown by the blower and fuel and that also exhausts exhaust gas; a supercharger that is driven by the exhaust gas exhausted from the combustion chamber; a denitrification unit having a catalyst that performs reduction of nitrogen oxides in the exhaust gas exhausted from the supercharger; and a burner unit that is provided between the combustion chamber and the supercharger and from which fuel is sprayed into the exhaust gas to be guided to the supercharger to cause combustion, wherein the air blown by the blower is led out from the combustion chamber as combustion air before starting up the internal combustion engine.

The air blown by the blower is guided to the burner unit as the combustion air before starting up the internal combustion engine. By doing so, oxygen required for combusting the fuel sprayed from the burner unit can be supplied upstream of the supercharger. Accordingly, exhaust gas having a high temperature due to the combustion of the fuel and the air can be guided to the denitrification unit from the supercharger. Therefore, the denitrification unit can be preheated before starting up the internal combustion engine, and the denitrifying effect of the denitrification unit can be obtained from immediately after starting up the internal combustion engine.

Furthermore, in the internal combustion engine according to a first aspect of the present invention, the burner unit is provided with a main burner, from which the fuel is sprayed during the operation of the internal combustion engine, and an auxiliary burner, from which the fuel is sprayed before starting up the internal combustion engine.

The burner unit equipped with the main burner, from which the fuel is sprayed during the operation of the internal combustion engine, and the auxiliary burner, from which the fuel is sprayed before starting up the internal combustion engine, is provided. By doing so, the main burner and the auxiliary burner can be separately used in accordance with the operating state of the internal combustion engine. Because of this, before starting up the internal combustion engine, a stable combustion state can be achieved by using the auxiliary burner which is suitable for the amount of combustion air guided thereto. Therefore, the denitrification unit can be preheated in an appropriate manner.

Furthermore, in the internal combustion engine according to a second aspect of the present invention, the burner unit is supplied with the fuel at a flow volume based on a temperature of the exhaust gas on the downstream side of the denitrification device.

The flow volume of the fuel to be supplied to the burner unit is controlled on the basis of the temperature of the exhaust gas that flows out from the denitrification device. Because of this, when the temperature of the exhaust gas that flows out from the denitrification unit is low before starting up the internal combustion engine, the exhaust gas whose temperature has been increased can be guided to the denitrification unit by increasing the flow volume of the fuel to be supplied to the burner unit. Therefore, the denitrification unit can be preheated to a desired temperature. The desired temperature for the denitrification unit refers to a temperature that is suitable for denitrifying the exhaust gas guided to the denitrification unit.

Furthermore, a ship according to the present invention is provided with any one of the internal combustion engines described above.

The internal combustion engine with the denitrification unit that can obtain the denitrifying effect from immediately after starting up the internal combustion engine is employed. Therefore, the emission level of the nitrogen oxides exhausted from the ship can be reduced even immediately after starting up the internal combustion engine.

Furthermore, in a ship according to another aspect of the present invention, the auxiliary burner is supplied with ship service air as the air for spraying the fuel therefrom.

The ship service air is used as the air for spraying fuel from the auxiliary burner. Because of this, it is possible to increase the combustibility of the fuel sprayed from the auxiliary burner without providing a separate device for supplying the air for forming mist with (atomizing) the fuel.

### {Advantageous Effects of Invention}

Air blown by a blower is guided to a burner unit as combustion air which is led out from a combustion chamber before starting up an internal combustion engine. By doing so, oxygen required for combusting fuel sprayed from the burner unit can be supplied upstream of a supercharger. Accordingly, exhaust gas having high temperature due to combustion of the fuel and the air can be guided to a denitrification unit from the supercharger. Therefore, the denitrification unit can be preheated before starting up the internal combustion engine, and the denitrifying effect of the denitrification unit can be obtained from immediately after starting up the internal combustion engine.

### {Brief Description of Drawings}

Fig. 1 is a schematic configuration diagram of an internal combustion engine with a denitrification device provided in a ship according to a first embodiment of the present invention.
Fig. 2 is a schematic configuration diagram of an internal combustion engine with a denitrification device provided in a ship according to a second embodiment of the present invention.

### {Description of Embodiments}

### {First Embodiment}

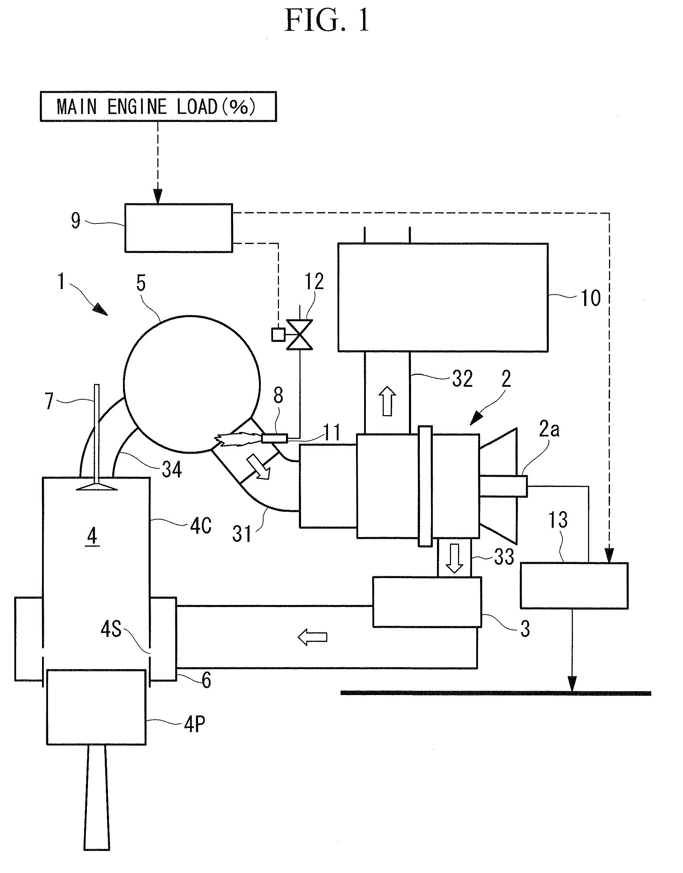

Fig. 1 shows a schematic configuration diagram of an internal combustion engine with a denitrification device provided in a ship according to a first embodiment of the present invention.
An internal combustion engine 1 of this embodiment will be described as applied to a two-cycle low-speed diesel engine (hereinafter, referred to as "internal combustion engine") employed mainly as a main engine of a ship.

The internal combustion engine 1 includes a hybrid supercharger (supercharger) 2 and an auxiliary blower (blower) 3.
The hybrid supercharger 2 is provided with a compressor (not shown), a turbine (not shown), a rotation shaft (not shown), and a generator 2a. The compressor sucks in atmospheric air and compresses the air. The turbine, to which exhaust gas is guided, generates rotational driving force by using energy, such as thermal energy or the like, possessed by the exhaust gas. The rotation shaft is connected between the turbine and the supercharger. Rotationally driving the turbine causes the rotation shaft to be rotated. Rotating the rotation shaft causes the compressor to be rotationally driven to compress the air. The generator 2a is connected to an end of the rotation shaft. Rotating the rotation shaft causes the generator 2a to generate power.

As shown in Fig. 1, the hybrid supercharger 2 is connected to a first exhaust pipe 31 that guides the exhaust gas to the turbine of the hybrid supercharger 2; a second exhaust pipe 32 through which the exhaust gas that has driven the turbine is led out from the hybrid supercharger 2; and an air intake pipe 33 through which the air compressed by the compressor of the hybrid supercharger 2 is led out.

A known hybrid supercharger can be employed as the hybrid supercharger 2, and it is not particularly limited. A known supercharger may be employed instead of the hybrid supercharger 2.

The auxiliary blower 3 blows air to the internal combustion engine 1. The auxiliary blower 3, is employed when the hybrid supercharger 2 cannot guide air to the internal combustion engine 1, such as before starting up the internal combustion engine 1, when the internal combustion engine 1 is in a low-load operation, and so forth. The auxiliary blower 3 is provided at an intermediate position of the air intake pipe 33 which connects the compressor of the hybrid supercharger 2 and the internal combustion engine 1.

As shown in Fig. 1, the internal combustion engine 1 is mainly provided with a plurality of cylinders 4C, a plurality of pistons 4P, a single exhaust collecting pipe 5, and a single scavenging chamber 6.
The cylinders 4C and the pistons 4P form combustion chambers 4 together with cylinder covers (not shown). Accordingly, a plurality of combustion chambers 4 are formed in a number corresponding to the number of the cylinders 4C and the number of pistons 4P (Fig. 1 shows only a single combustion chamber 4). As shown in Fig. 1, the combustion chambers 4 are connected to the air intake pipe 33 that guides the air thereto from the hybrid supercharger 2 or the auxiliary blower 3 and exhaust pipes 34 through which the exhaust gas generated by combusting fuel in the combustion chambers 4 is exhausted.

The cylinder covers forming the combustion chambers 4 are individually provided with fuel spray valves (not shown) that spray fuel into the combustion chambers 4 and exhaust valves 7 that exhaust the exhaust gas generated in the combustion chambers 4. The exhaust gas generated by combusting the fuel in the combustion chambers 4 is exhausted to the exhaust pipes 34 by opening the exhaust valves 7.

With regard to the configuration of the cylinders 4C, the pistons 4P, the cylinder covers, the fuel valves, and the exhaust valves 7, the configuration of a known two-cycle low-speed diesel engine can be employed, and it is not particularly limited.

The exhaust gas exhausted from the plurality of combustion chambers 4 through the individual exhaust pipes 34 flows into the exhaust collecting pipe 5 to be merged therein. The exhaust collecting pipe 5 is connected to the plurality of exhaust pipes 34, which connect the pipe 5 with the plurality of combustion chambers 4, and the first exhaust pipe 31, which connects the pipe 5 with the turbine of the hybrid supercharger 2.

The first exhaust pipe 31 is a flow channel that connects between the exhaust collecting pipe 5 and the hybrid supercharger 2, and it guides the exhaust gas to the hybrid supercharger 2 from the exhaust collecting pipe 5. The first exhaust pipe 31 is provided with a burner unit 8. The burner unit 8 jets fuel into the first exhaust pipe 31 and combusts it to generate high-temperature exhaust gas.

The burner unit 8 is provided with a burner 11 and a fuel adjustment valve 12. The burner 11 jets fuel, which is supplied thereto from a fuel system (not shown), into the exhaust collecting pipe 5. The fuel adjustment valve 12 is a flow-volume adjustment valve that adjusts a flow volume of the fuel to be supplied to the burner 11 and adjusts the flow volume of the fuel on the basis of a control signal input from a controller 9, as shown in Fig. 1.
With regard to the configurations of the burner 11 and the fuel adjustment valve 12, known configurations can be employed, and they are not particularly limited.

The denitrification device 10 is provided at an intermediate position of the second exhaust pipe 32 connected to the downstream side of the hybrid supercharger 2.
The denitrification device (denitrification unit) 10 performs reduction of nitrogen oxides (hereinafter, referred to as "NOx") contained in the exhaust gas, and has a catalyst (not shown) for performing the reduction of NOx in the interior thereof. The exhaust gas that has flowed out from the denitrification device 10 is guided to the outside from a collected exhaust system (not shown).
A known catalyst can be employed as the catalyst for performing the reduction of NOx, and it is not particularly limited.

As shown in Fig. 1, the controller 9 controls the fuel adjustment valve 12 provided in the burner unit 8. The temperature of the exhaust gas at an outlet of the denitrification device 10 measured by an exhaust-gas temperature sensor (not shown), described later, is input to the controller 9. The controller 9 outputs the control signal for controlling the degree of opening of the fuel adjustment valve 12.

The exhaust-gas temperature sensor is disposed near the outlet of the denitrification device 10 in the second exhaust pipe 32 connected on the downstream side of the denitrification device 10. The exhaust-gas temperature sensor is a temperature sensor that measures the temperature of the exhaust gas led out from the denitrification device 10.

Next, the flow of air before starting up the internal combustion engine with the denitrification device according to this embodiment will be described.
Before starting up the internal combustion engine 1, the operation of the auxiliary blower 3 is started first. Air is blown to the internal combustion engine 1 via the air intake pipe 33 from the auxiliary blower 3 whose operation has been started. The air that has been blown to the internal combustion engine 1 is guided into the combustion chambers 4 from scavenging holes 4S provided in the cylinders 4C. The combustion chambers 4 to which the air is guided are the combustion chambers 4 corresponding to the cylinders 4C for which a crank shaft (not shown) that is connected to the plurality of pistons 4P provided in the internal combustion engine 1 is at the lower dead center.

In the combustion chambers 4 corresponding to the pistons 4P for which the crank shaft is at the lower dead center, the exhaust valves 7 provided in the cylinder covers are open. Because of this, the air guided into the combustion chambers 4 is guided to the exhaust collecting pipe 5 from the combustion chambers 4 via the exhaust valves 7 and the exhaust pipes 34.
Because the internal combustion engine 1 has not been started up, fuel is not sprayed into the combustion chambers 4 from the fuel-jetting valves. Accordingly, exhaust gas is not exhausted from the internal combustion engine 1 itself.

The air in the exhaust collecting pipe 5 is guided to the first exhaust pipe 31. Fuel is sprayed into the air guided to the first exhaust pipe 31 from the burner 11 provided in the first exhaust pipe 31. The air guided to the first exhaust pipe 31 contains oxygen. Accordingly, the air guided to the first exhaust pipe 31 is used as combustion air for the burner 11.

The fuel is combusted in the first exhaust pipe 31 by jetting the fuel from the burner 11 into the air guided thereto. By combusting the fuel, exhaust gas is generated inside the first exhaust pipe 31. The temperature of the generated exhaust gas is increased by the heat generated when the fuel is combusted.

The exhaust gas whose temperature is increased is guided to the hybrid supercharger 2 via the first exhaust pipe 31. The flow volume of the exhaust gas guided to the hybrid supercharger 2 is smaller as compared with a flow volume required to drive the hybrid supercharger 2. Because of this, the hybrid supercharger 2 is rotationally driven only at very low rotational speed. With the hybrid supercharger 2 rotating at very low speed, the air is blown to the air intake pipe 33 by the compressor.

The exhaust gas that has rotationally driven the hybrid supercharger 2 at the very low rotational speed is led out to the second exhaust pipe 32, maintaining nearly the same temperature. The high-temperature exhaust gas led out to the second exhaust pipe 32 flows into the denitrification device 10. The high-temperature exhaust gas that has flowed into the denitrification device 10 is guided to the catalyst in the denitrification device 10. The catalyst is preheated by the high-temperature exhaust gas guided thereto. The exhaust gas that has preheated the catalyst is exhausted to the collected exhaust system by being led out to the second exhaust pipe 32 from the denitrification device 10.

Next, control performed by the controller 9 before starting up the internal combustion engine 1 will be described.
A measurement signal for the temperature of the exhaust gas led out from the denitrification device 10, which is measured by the exhaust-gas temperature sensor provided in the second exhaust pipe 32, is input to the controller 9. The controller 9 performs control of the fuel adjustment valve 12 on the basis of the input measurement signal so as to increase the flow volume of the fuel supplied to the burner unit 8 when the temperature of the exhaust gas is lower than a predetermined temperature.
The predetermined temperature for the exhaust gas at the outlet of the denitrification device 10 means a temperature that is suitable for denitrifying the exhaust gas guided to the denitrification device 10.

When it is judged that the temperature of the exhaust gas led out from the denitrification device 10 has reached the predetermined temperature, the controller 9 stops the supply of the fuel to be guided to the burner unit 8, assuming that the catalyst in the denitrification device 10 has reached a temperature that is suitable for obtaining the denitrifying effect. By doing so, preheating of the catalyst in the denitrification device 10 is completed.

Next, the operation of the internal combustion engine 1 will be described in outline.
When starting up the internal combustion engine 1, air is blown thereinto by the auxiliary blower 3. The blown air is guided to the combustion chambers 4 passing through the scavenging holes 4S from the scavenging chamber 6. Fuel is sprayed into the air guided to the combustion chambers 4 from the fuel valves that are provided in the cylinder covers forming the combustion chambers 4. The fuel sprayed into the combustion chambers 4 forms exhaust gas by being combusted together with the air blown thereto by the auxiliary blower 3. The exhaust gas generated in the combustion chambers 4 is exhausted to the exhaust collecting pipe 5 via the exhaust valves 7 that are open.

The exhaust gas guided to the exhaust collecting pipe 5 from the individual combustion chambers 4 is led out to the first exhaust pipe 31. Fuel is sprayed into the exhaust gas led out to the first exhaust pipe 31 by the burner 11 of the burner unit 8. Accordingly, the fuel sprayed into the first exhaust pipe 31 is combusted. The exhaust gas guided to the first exhaust pipe 31 from the internal combustion engine 1 is heated by the heat from the combustion of the fuel sprayed into the first exhaust pipe 31.
For the fuel sprayed by the burner 11 here, the flow volume thereof is determined in accordance with a main-engine load signal for the internal combustion engine 1 input to the controller 9.

The heated exhaust gas is guided to the hybrid supercharger 2 from the first exhaust pipe 31. The exhaust gas guided to the hybrid supercharger 2 rotationally drives the turbine of the hybrid supercharger 2. By causing the turbine to be rotationally driven, the rotation shaft connected to the turbine is rotated. Accordingly, the compressor connected to the rotation shaft sucks in the air to compress it. The air compressed by the compressor is supplied to the internal combustion engine 1 from the air intake pipe 33.

By causing the turbine to be rotationally driven, the generator 2a connected at the end of the rotation shaft generates power. The electricity generated by the generator 2a is converted to a predetermined frequency by a frequency converter 13 and is utilized as onboard power and so forth.

The temperature of the exhaust gas that has rotationally driven the turbine decreases by an amount corresponding to the energy lost by rotationally driving the turbine. The exhaust gas whose temperature has decreased is led out to the second exhaust pipe 32 from the hybrid supercharger 2. The exhaust gas that has been led out to the second exhaust pipe 32 comes into contact with the catalyst by being guided to the denitrification device 10. The catalyst provided in the denitrification device 10 has already been preheated to the temperature that is suitable for obtaining the denitrifying effect. Accordingly, NOx contained in the exhaust gas guided to the denitrification device 10 undergoes reduction by passing through the denitrification device 10. The exhaust gas is subsequently guided to the collected exhaust system from the denitrification device 10 passing through the second exhaust pipe 32.

As described above, with the internal combustion engine with the denitrification device according to this embodiment and the ship provided with the same, the following operational advantages are afforded.
The air blown by the auxiliary blower (blower) 3 is guided to the burner unit 8 as combustion air which is led out from the combustion chambers 4 before starting up the internal combustion engine 1 with the denitrification device (denitrification unit) 10. By doing so, oxygen required for combusting the fuel sprayed from the burner unit 8 can be supplied to the upstream side of the hybrid supercharger (supercharger) 2. Accordingly, exhaust gas having a high temperature due to the combustion of the fuel and the air can be guided to the denitrification device 10 from the hybrid supercharger 2. Therefore, the denitrification device 10 can be preheated before starting up the internal combustion engine 1, and the denitrifying effect of the denitrification device 10 can be obtained from immediately after starting up the internal combustion engine 1.

The flow volume of the fuel to be supplied to the burner 11 of the burner unit 8 is controlled on the basis of the temperature of the exhaust gas that flows out from the denitrification device 10. Because of this, when the temperature of the exhaust gas that flows out from the denitrification device 10 is low before starting up the internal combustion engine 1, exhaust gas whose temperature has been increased can be guided to the denitrification device 10 by increasing the flow volume of the fuel to be supplied to the burner 11. Therefore, the denitrification device 10 can be preheated to a desired temperature.

The internal combustion engine 1 with the denitrification device 10 that can obtain the denitrifying effect from immediately after starting up the internal combustion engine 1 is employed. Therefore, the emission level of the nitrogen oxides exhausted from the ship can be reduced even immediately after starting up the internal combustion engine 1.

Although this embodiment has been described assuming that the burner 11 of the burner unit 8 is disposed in the first exhaust pipe 31, the burner 11 may be provided in the exhaust collecting pipe 5, and it is not particularly limited.

### {Second Embodiment}

A second embodiment of the present invention will be described below. An internal combustion engine with a denitrification device of this embodiment and a ship provided with the same differ from those of the first embodiment in that a burner unit thereof is formed of a main burner and an auxiliary burner, and other aspects are the same. Therefore, the same reference signs will be assigned to the same configurations, and to the same flow and control method, and descriptions thereof will be omitted.

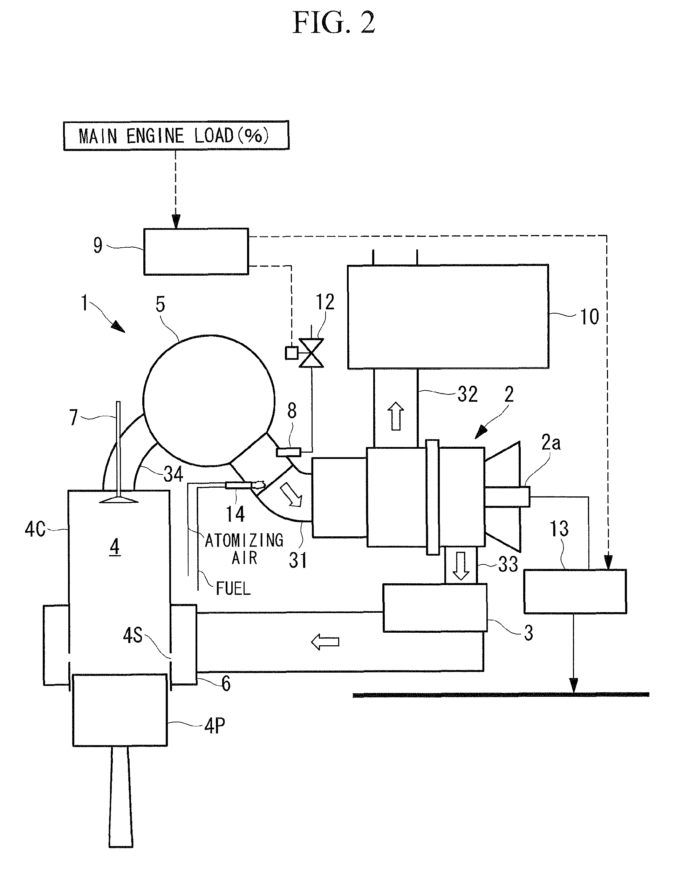

Fig. 2 shows a schematic configuration diagram of an internal combustion engine with a denitrification device provided in a ship of the second embodiment of the present invention.

The burner unit (not shown) is provided with two burners, that is, a main burner 13 and an auxiliary burner 14.
The fuel supplied from the fuel supply system (not shown) is guided to the main burner 13 with a flow volume thereof adjusted by the fuel adjustment valves 12. The fuel is sprayed from the main burner 13 in order to heat the exhaust gas guided from the exhaust collecting pipe 5 after starting up the internal combustion engine 1.
The fuel is sprayed into the air, which is guided from the auxiliary blower (blower) 3, from the auxiliary burner 14 in order to preheat the denitrification device (denitrification unit) 10 before starting up the internal combustion engine 1.

The fuel from the fuel supply system, at a predetermined flow volume, and air guided from a ship service air system (not shown) are supplied to the auxiliary burner 14. The air guided to the auxiliary burner 14 from the service air system (service air) is used as atomizing air for forming mist with (atomizing) the fuel sprayed from the auxiliary burner 14. By doing so, the fuel sprayed from the auxiliary burner 14 is turned into particle-sized fine mist. The flow volume of the fuel to be guided to the auxiliary burner 14 corresponds to the amount of air guided to the first exhaust pipe 31 when the auxiliary blower 3 is driven.

The controller 9 controls the auxiliary burner 14 so that the fuel is sprayed from the auxiliary burner 14 before starting up the internal combustion engine 1. When the temperature of the exhaust gas from the denitrification device 10, which is measured by the exhaust-gas temperature sensor (not shown) provided in the second exhaust pipe 32, subsequently reaches the predetermined temperature, the controller 9 stops the spraying of the fuel from the auxiliary burner 14 and switches to an operation in which the fuel is sprayed from the main burner 13.

As described above, with the internal combustion engine with the denitrification device according to this embodiment and the ship provided with the same, the following operational advantages are afforded.
The burner unit (not shown) equipped with the main burner 13, from which the fuel is sprayed during the operation of the internal combustion engine 1, and the auxiliary burner 14, from which the fuel is sprayed (jetted) before starting up the internal combustion engine 1, is provided. By doing so, the main burner 13 and the auxiliary burner 14 can be separately used in accordance with the operating state of the internal combustion engine 1. Because of this, before starting up the internal combustion engine 1, a stable combustion state can be achieved by using the auxiliary burner 14 which is suitable for the flow volume of the combustion air guided thereto from the auxiliary blower (blower) 3 via the combustion chambers 4 of the internal combustion engine 1. Therefore, the denitrification device (denitrification unit) 10 can be preheated in an appropriate manner.

The air from ship service air system (service air) is used as the air for spraying the fuel from the auxiliary burner 14. Because of this, it is possible to increase the combustibility of the fuel sprayed from the auxiliary burner 14 without providing a separate device for supplying the air for forming mist with (atomizing) the fuel.

### {Reference Signs List}

- 1: internal combustion engine
- 2: hybrid supercharger (supercharger)
- 3: auxiliary blower (blower)
- 4: combustion chamber
- 8: burner unit
- 10: denitrification device (denitrification unit)

## Claims

1. An internal combustion engine comprising:
a blower that blows air;
a combustion chamber that generates a driving force by combusting the air blown by the blower and fuel and that also exhausts exhaust gas;
a supercharger that is driven by the exhaust gas exhausted from the combustion chamber;
a denitrification unit having a catalyst that performs reduction of nitrogen oxides in the exhaust gas exhausted from the supercharger; and
a burner unit that is provided between the combustion chamber and the supercharger and from which fuel is sprayed into the exhaust gas to be guided to the supercharger to cause combustion,
wherein the air blown by the blower is led out from the combustion chamber as combustion air before starting up the internal combustion engine.

2. An internal combustion engine according to Claim 1, wherein the burner unit is provided with a main burner, from which the fuel is sprayed during the operation of the internal combustion engine, and an auxiliary burner, from which the fuel is sprayed before starting up the internal combustion engine.

3. An internal combustion engine according to Claim 1 or 2, wherein the burner unit is supplied with the fuel at a flow volume based on a temperature of the exhaust gas on the downstream side of the denitrification device.

4. A ship provided with an internal combustion engine according to any one of Claims 1 to 3.

5. A ship according to Claim 4, wherein the auxiliary burner is supplied with ship service air as the air for spraying the fuel therefrom.
